# DEMANDE DE BREVET EUROPEEN

(11) **EP 1 884 875 A1**
(43) Date de publication de la demande: **06.02.2008**
(21) Numéro de dépôt: 07112718.7
(22) Date de dépôt: 18.07.2007
(51) Int. Cl.: G06F 13/42, G06F 15/76, H04L 12/54

(54) **Système de gestion de messages transmis dans un réseau d'interconnexions sur puce**

(30) Priorité: 26.07.2006 FR 0606833
(71) Demandeur: ARTERIS, 78280 Guyancourt (FR)
(72) Inventeur: Kok, Sophana, 78960 Voisins le Bretonneux (FR); Boucard, Philippe, 78150 Le Chesnay (FR)
(74) Mandataire: de Kernier, Gabriel

(57) **Abrégé**

Procédé de gestion de messages transmis dans un réseau d'interconnexions (3) sur puce, dans lequel un agent émetteur (6) émet un message de demande de capacité de traitement disponible (Req_écriture_1(N données)) à destination d'un agent récepteur (8), ledit message de demande de capacité (Req_écriture_1(N données)) comprenant l'adresse de destination de l'agent récepteur (8) et étant de taille inférieure ou égale à une taille prédéterminée, émet un message d'instructions (Envoi_de_N_données) lorsque l'agent récepteur (8) est prêt à traiter lesdites instructions, et libère tout ou partie de l'espace de mémoire occupé par ledit message d'instructions (Envoi_de_N_données) après ladite émission dudit message d'instructions mémorisé (Envoi_de_N_données).

## Description

La présente invention porte sur un système et un procédé de gestion de messages transmis dans un réseau d'interconnections de blocs fonctionnels sur puce, par exemple sur puce de silicium.

Les systèmes sur puce ("On-Chip Systems", en langue anglaise) comprennent un nombre croissant de blocs fonctionnels ou blocs IP ("Intellectual Property Block", en langue anglaise) communiquant par un réseau d'interconnexions ("Network-on-Chip", en langue anglaise). Un réseau d'interconnexions permet à différents blocs fonctionnels, pouvant être cadencés par des fréquences d'horloge différentes ou utilisant des protocoles de communication différents, de communiquer au moyen d'un unique protocole de transport de messages.

Dans un système sur puce, les messages échangés comprennent essentiellement des transactions entre un bloc initiateur et un bloc destinataire. Ainsi, le bloc initiateur effectue des opérations, telles que des lectures ou des écritures de données dans le bloc destinataire. Aussi, de nombreuses requêtes d'écriture ou de lecture de données, et des réponses associées circulent entre les différents blocs fonctionnels, ces messages comprenant des informations à échanger, ou données utiles ("payload", en langue anglaise), ainsi que des informations nécessaires à l'acheminement et au traitement des messages, généralement situées dans les en-têtes des messages.

Le coût des blocs fonctionnels d'un système sur puce étant relativement élevé, il est important d'exploiter au maximum leur capacité de fonctionnement, et de minimiser les risques d'absence de données en entrée de ces blocs fonctionnels. Or, les échanges de données sur le réseau d'interconnexions n'étant généralement pas prédictibles, des congestions ou blocages du trafic de données aux bornes de ces blocs fonctionnels se produisent occasionnellement. Si un tel blocage se propage à l'intérieur du réseau d'interconnexions, le système complet peut se retrouver complètement bloqué ou paralysé. Or, plus le nombre de blocs fonctionnels est élevé, et plus la complexité du réseau d'interconnexions augmente, et il devient difficile et coûteux de prédire les trafics de données.

Aussi, un but de l'invention est d'éviter un tel blocage du réseau résultant d'une congestion du trafic de données aux bornes d'un bloc fonctionnel, à coût réduit.

Selon un aspect de l'invention, il est proposé un système de gestion de messages transmis dans un réseau d'interconnexions sur puce, comprenant au moins un agent émetteur et un agent récepteur. L'agent émetteur est adapté pour :
- mémoriser un message d'instructions de taille supérieure à une taille prédéterminée ;
- émettre un message de demande de capacité de traitement disponible pour l'agent émetteur, ledit message de demande de capacité comprenant une adresse de destination et étant de taille inférieure ou égale à ladite taille prédéterminée, vers l'agent récepteur correspondant à ladite adresse de destination;
- émettre vers l'agent récepteur ledit message d'instructions mémorisé, à réception d'un message d'autorisation d'instructions de l'agent récepteur lorsque l'agent récepteur est près à traiter lesdites instructions; et
- libérer tout ou partie de l'espace de mémoire occupé par ledit message d'instructions après ladite émission dudit message d'instructions mémorisé.

Lors, par exemple, d'une écriture de données, on évite l'envoi de messages de grande taille qui encombreraient inutilement le réseau d'interconnexions, lorsqu'il n'y a pas de ressources disponibles pour les traiter à leur arrivée. Ainsi, à coût réduit, on limite les risques de blocage du système sur puce, en limitant la possibilité de congestion de trafic en entrée de blocs fonctionnels. Les blocs fonctionnels sont utilisés de manière efficace. Le trafic dans le réseau d'interconnexions est ainsi fluidifié, et les vitesses du réseau d'interconnexions et des blocs fonctionnels sont découplées quel que soit l'état de fonctionnement des blocs fonctionnels, et ainsi, en cas de problème de trafic dans le réseau d'interconnexions, la vitesse du réseau d'interconnexions n'est pas limitée par les vitesses des blocs fonctionnels destinataires. Il y a un découplage total entre la vitesse du réseau d'interconnexions et celles des blocs fonctionnels destinataires.

Selon un mode de réalisation, l'agent émetteur est, en outre, adapté pour émettre à nouveau ledit message de demande de capacité, à réception d'un message d'autorisation de demande de l'agent récepteur lorsque l'agent récepteur est prêt à traiter ladite demande de capacité.

L'agent émetteur renvoie le message de demande de capacité uniquement lorsque ce message peut être traité par l'agent récepteur. En outre, l'agent récepteur ne retourne qu'un unique message d'autorisation de demande, et non une multitude. L'encombrement du réseau est alors limité, ainsi que les risques de blocages du réseau d'interconnexions.

Selon un autre aspect de l'invention, il est également proposé un système de gestion de messages transmis dans un réseau d'interconnexions sur puce comprenant au moins un agent émetteur et un agent récepteur. L'agent récepteur est adapté pour :
- allouer des moyens de traitement d'un message de demande de capacité de traitement disponible provenant de l'agent émetteur si l'agent récepteur est prêt à traiter ladite demande de capacité. Ledit message de demande de capacité est de taille inférieure ou égale à une taille prédéterminée; et
- émettre un message d'autorisation d'instructions, de taille inférieure ou égale à ladite taille prédéterminée, vers l'agent émetteur, autorisant l'agent émetteur à émettre un message d'instruction de taille supérieure à ladite taille prédéterminée, lorsque l'agent récepteur est prêt à traiter lesdites instructions, après avoir alloué des moyens de traitement pour traiter ledit message de demande de capacité.
Ainsi, le message d'instructions, comprenant des données utiles de grande taille, par exemple pour une écriture de données, est émis dans le réseau d'interconnexions uniquement lorsque l'agent récepteur est prêt à traiter les instructions.

Dans un mode de réalisation, l'agent récepteur est, en outre, adapté, lorsque l'agent récepteur est incapable de traiter immédiatement ladite demande de capacité, pour mémoriser une information représentative de la réception dudit message de demande de capacité afin d'attendre d'être prêt à traiter ladite demande de capacité, allouer des moyens de traitement dudit message de demande de capacité et émettre un message d'autorisation de demande vers l'agent émetteur, autorisant le renvoi du message de demande de capacité de l'agent émetteur vers l'agent récepteur. Ledit message d'autorisation de demande est de taille inférieure ou égale à ladite taille prédéterminée.

Ainsi, le récepteur mémorise uniquement une information, occupant une faible place de mémoire, représentative de la réception d'un message d'instructions, qu'il est incapable de traiter dans l'immédiat, provenant d'un agent émetteur. En d'autres termes on mémorise uniquement une information de taille inférieure à celle du message, qui lui n'est pas mémorisé. Ainsi l'encombrement du réseau d'interconnexions est limité, ainsi que les risques de congestion ou blocage du trafic de données aux bornes de ces blocs fonctionnels.

Il est également proposé, selon un autre aspect de l'invention, un système de gestion de messages transmis dans un réseau d'interconnexions sur puce comprenant au moins un agent émetteur et un agent récepteur. L'agent émetteur est adapté pour :
- mémoriser un message d'instructions ;
- émettre ledit message d'instructions, comprenant une adresse de destination et étant de taille inférieure ou égale à une taille prédéterminée, vers l'agent récepteur correspondant à ladite adresse de destination ; et
- libérer tout l'espace de mémoire occupé par ledit message d'instructions à réception d'un message de notification de fin de traitement de l'agent récepteur ou à nouvelle émission dudit message d'instructions suite à réception d'un message d'autorisation d'instructions de l'agent récepteur.

La gestion de l'espace de mémoire de l'agent émetteur est ainsi optimisée.

Dans un mode de réalisation, l'agent émetteur est, en outre, adapté pour émettre vers l'agent récepteur ledit message d'instructions mémorisé, à réception d'un message d'autorisation d'instructions de l'agent récepteur lorsque l'agent récepteur est prêt à traiter lesdites instructions.

Selon un autre aspect de l'invention, il est également proposé un système de gestion de messages transmis dans un réseau d'interconnexions sur puce comprenant au moins un agent émetteur et un agent récepteur. L'agent récepteur est adapté pour allouer des moyens de traitement dudit message d'instructions si l'agent récepteur est prêt à traiter ledit message d'instructions. Ledit message d'instruction est de taille inférieure ou égale à une taille prédéterminée.

Pour une lecture de données, le message n'est réémis dans le réseau que lorsque l'agent récepteur est prêt à traiter le message, on évite ainsi d'envoyer un message inutilement dans le réseau. Par conséquent, l'agent récepteur ne retourne qu'un unique message d'autorisation de demande, et non une multitude. L'encombrement du réseau est alors limité, ainsi que les risques de blocages du réseau d'interconnexions.

Selon un mode de réalisation, l'agent émetteur est adapté pour libérer l'espace de mémoire occupé par un message d'instructions mémorisé, après réception du message d'autorisation d'instructions et émission dudit message d'instructions mémorisé.

La gestion de l'espace de mémoire de l'agent émetteur est ainsi optimisée.

Dans un mode de réalisation, l'agent récepteur est, en outre, adapté, lorsque l'agent récepteur est incapable de traiter immédiatement ledit message d'instructions, pour mémoriser une information représentative de la réception dudit message d'instructions afin d'attendre d'être prêt à traiter ledit message d'instructions, allouer des moyens de traitement dudit message d'instructions et émettre un message d'autorisation d'instructions vers l'agent émetteur, autorisant le renvoi du message d'instructions de l'agent émetteur vers l'agent récepteur.

Le récepteur mémorise uniquement une information occupant une faible place de mémoire et représentative de la réception d'un message d'instructions provenant d'un agent émetteur, ne pouvant être immédiatement traité par l'agent récepteur. Le message d'instructions, par exemple de lecture de données, n'est renvoyé dans le réseau d'interconnexions que lorsque l'agent récepteur est prêt à le traiter, on évite ainsi d'encombrer inutilement le réseau d'interconnexions, et on limite les risques de blocage du réseau d'interconnexions.

Selon un mode de réalisation, l'agent émetteur est adapté pour fractionner un message de taille supérieure à ladite taille prédéterminée en plusieurs messages de taille supérieure à ladite taille prédéterminée. En outre, ledit message d'autorisation comprend un paramètre représentatif de la taille maximale d'instructions pouvant être traitées par l'agent récepteur. L'agent émetteur est adapté pour libérer une partie, de taille égale à ladite taille maximale, de l'espace de mémoire occupé par un message d'instructions mémorisé, après réception du message d'autorisation d'instructions et émission d'un message d'instructions comprenant une partie, de taille égale à ladite taille maximale, des instructions dudit message d'instructions mémorisé.

La gestion de la mémoire de l'agent émetteur est ainsi optimisée car dès qu'une partie des instructions pouvant être traitées par l'agent récepteur est envoyée, celle-ci est effacée de la mémoire. La gestion de la mémoire de l'agent émetteur est optimisée, car dès l'envoi d'une partie des instructions d'un message d'instructions mémorisé, cette partie est effacée. De surcroît, un tel fractionnement permet d'insérer d'autres messages dans le réseau d'interconnexions entre les messages fractionnés.

Selon un mode de réalisation, ledit agent récepteur est adapté pour réserver ses capacités de traitement aux messages d'instructions provenant exclusivement de l'un desdits agents initiateurs.

Il est alors possible, pour une période donnée, de dédier les ressources d'un bloc destinataire auquel est dédié un agent récepteur, à l'usage exclusif d'un bloc initiateur correspondant à un agent émetteur, sans pour cela bloquer un chemin dans le réseau d'interconnexions.

Par exemple, la taille prédéterminée correspond à la taille de l'en-tête d'un message.

Selon un mode de réalisation, ledit réseau d'interconnexions comprenant un réseau de requêtes et un réseau de réponses distincts, ledit système de gestion est dédié au réseau de requêtes.

Le trafic de données étant initié par les blocs initiateurs, ceux-ci peuvent gérer la quantité de réponses attendues. L'invention permet aux blocs destinataires de gérer efficacement la quantité de requêtes émises par les blocs initiateurs, ou de limiter le trafic initié par les blocs initiateurs. Aussi les blocs destinataires peuvent mieux anticiper le trafic de données à venir.

Selon un mode de réalisation, ledit réseau d'interconnexions comprenant un réseau de requêtes et un réseau de réponses distincts, ledit système de gestion de messages est dédié au réseau de réponses.

Un bloc destinataire peut ainsi envoyer des messages de réponses de grande taille, en fractionnant les messages de réponses en en messages de tailles telles que les blocs initiateurs sont prêt à les traiter. On limite ainsi les risques d'encombrement et de blocage du réseau d'interconnexions.

Selon un mode de réalisation, ledit agent émetteur est adapté pour gérer l'envoi de messages d'instructions mémorisés en fonction de la latence minimum séparant l'envoi d'un message de demande de capacité ou d'un message d'instructions et la réception du message d'autorisation correspondant, pour éviter la présence de trous de données lors de l'envoi de messages d'instructions.

La présence de trous de données est alors limitée en gardant une latence réduite. On entend par trous de données des bits de données ne représentant aucune information à l'intérieur d'un message.

Selon un mode de réalisation, ledit agent récepteur est adapté pour mémoriser, pour chaque agent émetteur possible, sous forme de file d'attente, un nombre prédéterminé d'informations représentatives de la réception de messages de demande de capacité ou de messages d'instructions, de taille inférieure ou égale à ladite taille prédéterminée, provenant de l'agent émetteur correspondant à ladite file d'attente.

Ainsi, un récepteur effectue le suivi d'un nombre fini de messages par émetteur, et peut mieux anticiper le trafic de données à venir et mieux gérer ses attributions de ressources de traitement.

Selon un mode de réalisation, ledit agent récepteur est adapté pour traiter en priorité les messages prioritaires de demande de capacité ou d'instructions, de taille inférieure ou égale à ladite taille prédéterminée.

Ainsi, en cas d'indisponibilité du bloc destinataire, l'agent récepteur mémorise qu'il a rejeté un message prioritaire dans l'information représentative de la réception d'un message de demande de capacité ou d'instructions qu'il ne peut pas traiter dans l'immédiat. Lorsque le bloc destinataire peut allouer des ressources de traitement , il les alloue en priorité au message prioritaire, et un message d'autorisation d'instructions est alors envoyé en priorité à l'agent émetteur qui a émis le message prioritaire. Par conséquent, il n'est pas nécessaire d'attendre le déblocage des autres messages non prioritaires arrivés avant le message prioritaire.

Selon un autre aspect de l'invention, il est également proposé un procédé de gestion de messages transmis dans un réseau d'interconnexions sur puce, dans lequel un agent émetteur émet un message de demande de capacité de traitement disponible à destination d'un agent récepteur. Ledit message de demande de capacité comprend l'adresse de destination de l'agent récepteur et est de taille inférieure ou égale à une taille prédéterminée. L'agent émetteur émet un message d'instructions lorsque l'agent récepteur est prêt à traiter lesdites instructions, et libère tout ou partie de l'espace de mémoire occupé par ledit message d'instructions après ladite émission dudit message d'instructions mémorisé.

Selon un autre aspect de l'invention, il est également proposé un procédé de gestion de messages transmis dans un réseau d'interconnexions sur puce, dans lequel un agent émetteur émet un message d'instructions à destination d'un agent récepteur. Ledit message d'instructions comprend l'adresse de destination de l'agent récepteur et est de taille inférieure ou égale à une taille prédéterminée. L'agent émetteur émet à nouveau ledit message d'instructions lorsque l'agent récepteur est prêt à traiter lesdites instructions, et libère tout ou partie de l'espace de mémoire occupé par ledit message d'instructions à réception d'un message de notification de fin de traitement de l'agent récepteur ou à nouvelle émission dudit message d'instructions suite à réception d'un message d'autorisation d'instructions de l'agent récepteur.

D'autres buts, caractéristiques et avantages de l'invention apparaîtront à la lecture de la description suivante, de quelques exemples nullement limitatifs, et faisant référence aux dessins annexés sur lesquels :
- la figure 1 représente schématiquement un système selon un aspect de l'invention ;
- la figure 2 illustre le fonctionnement d'un système selon la figure 1 pour un premier exemple de transaction d'écriture de données entre un agent émetteur et un agent récepteur ;
- la figure 3 illustre le fonctionnement d'un système selon la figure 1 pour un deuxième exemple de transaction d'écriture de données entre un agent émetteur et un agent récepteur ;
- la figure 4 illustre le fonctionnement d'un système selon la figure 1 pour un premier exemple de transaction de lecture de données entre un agent émetteur et un agent récepteur; et
- la figure 5 illustre le fonctionnement d'un système selon la figure 1 pour un deuxième exemple de transaction de lecture de données entre un agent émetteur et un agent récepteur.

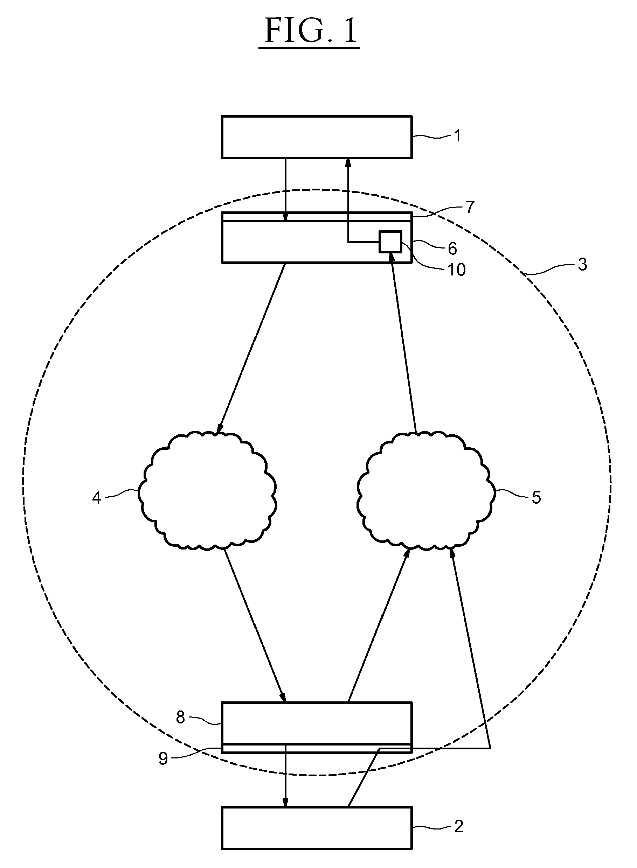

Tel qu'illustré schématiquement sur la figure 1, un bloc initiateur 1 et un bloc destinataire 2 sur puce, par exemple de silicium, peuvent communiquer par l'intermédiaire d'un réseau d'interconnexions 3. Sur la figure 1, le réseau d'interconnexions 3 comprend un réseau de requêtes 4 et un réseau de réponses 5 séparés. Bien entendu, l'invention s'applique également à des systèmes pour lesquels le réseau de requêtes et le réseau de réponses ne sont pas séparés.

Le bloc initiateur 1 est associé à un agent émetteur 6 et une interface réseau 7 ou "Socket" en langue anglaise. L'interface réseau 7 permet de faire communiquer le bloc initiateur 1 avec l'élément émetteur associé 6 du réseau d'interconnexions 3, pouvant être cadencé par une fréquence d'horloge et utiliser un protocole de communication différents de ceux du bloc initiateur 1. Le bloc destinataire 2 est associé à un agent récepteur 8 et à une interface réseau 9. En variante, les agents émetteurs et récepteurs peuvent être inclus dans leur interface réseau respective.

Bien entendu, généralement, le système comprend d'autres blocs initiateurs et d'autres blocs destinataires, non représentés sur la figure 1.

L'agent émetteur 6 comprend un module d'agrégation 10 pour agréger les statuts ou acquittements nécessaires lorsqu'une transaction de données telle qu'une écriture de données, entre le bloc initiateur 1 et le bloc destinataire 2 est décomposée en plusieurs étapes d'écritures de parties des données selon un aspect de l'invention décrit plus en détails par la suite.

Les messages de requêtes émis de l'agent émetteur 6 vers l'agent récepteur 8 peuvent être des messages de grande taille, comprenant des données utiles, telles que des messages de requête en écriture de données ou des messages de petite taille, telles que des messages de requête de lecture de données. Dans la suite de la description, on nommera message de grande taille ou message long, un message de taille supérieure à une taille prédéterminée, et message de petite taille ou message court, un message de taille inférieure ou égale à la taille prédéterminée, par exemple la taille d'un entête de message. En outre, dans la suite de la description, on applique l'invention au réseau de requêtes, toutefois l'invention peut s'appliquer au réseau de requêtes et/ou au réseau de réponses.

Il est également possible d'avoir deux réseaux de requêtes et deux réseaux de réponses, le réseau additionnel de requêtes et le réseau additionnel de réponse, de moindre latence, étant réservés au transport des messages courts ou de petite taille.

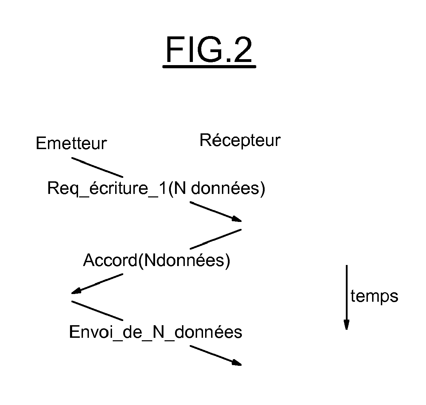

Dans le cas d'un message de requête comprenant des données utiles, par exemple une écriture de données, tel qu'illustré sur la figure 2, le bloc initiateur 1 émet un message de requête d'écriture à l'agent émetteur 6, par l'intermédiaire de l'interface réseau 7. L'agent émetteur 6 mémorise un message d'instructions, de grande taille, correspondant au message de requête en écriture de données. L'agent émetteur 6 émet un message de demande de capacité de traitement disponible Req_écriture_1(N données), de petite taille, comprenant une adresse de destination. L'adresse de destination est l'adresse de l'agent récepteur 8 dédié au bloc destinataire 2. Ce message de demande de capacité de traitement Req_écriture_1(N données) étant de petite taille, encombre peu le réseau d'interconnexions 3.

Lorsque le message de demande de capacité Req_écriture_1(N données) arrive à l'agent récepteur 8, celui-ci mémorise une information représentative de la réception de ce message de demande de capacité de traitement disponible provenant de l'agent émetteur 6, lorsque l'agent récepteur 8 ne peut traiter immédiatement ce message.

L'information représentative de la réception d'un message de demande de capacité est, par exemple, un ensemble de bits de données dédiés à un agent émetteur déterminé, représentant la présence ou non d'un message en attente de traitement, le type de traitement à effectuer, tel lecture ou écriture, et le niveau de priorité. Dans cet exemple, l'agent récepteur 8 peut immédiatement traiter ce message de demande de capacité, et alloue des moyens de traitement de cette demande. Puis, lorsque l'agent récepteur 8 est prêt à traiter les instructions, i.e l'écriture de N données, l'agent récepteur 8 émet un message d'autorisation d'instructions Accord(N données), de petite taille, vers l'agent émetteur 6, autorisant ce dernier à émettre le message d'instructions mémorisé Envoi_de_N_données. Dans cet exemple, l'agent récepteur peut immédiatement traiter la demande et les instructions.

Ainsi, ce message d'instructions mémorisé Envoi_de_N_données, de grande taille, est émis dans le réseau d'interconnexions uniquement lorsque l'agent récepteur 8 est prêt à traiter les instructions, en d'autres termes écrire les N données. De longs messages de données évitent ainsi de circuler dans le réseau d'interconnexions 3 lorsqu'à leur arrivée leur traitement n'est pas garanti. On diminue ainsi fortement les risques d'encombrement du réseau dus au blocage d'un agent récepteur 8 ou du bloc destinataire associé 2.

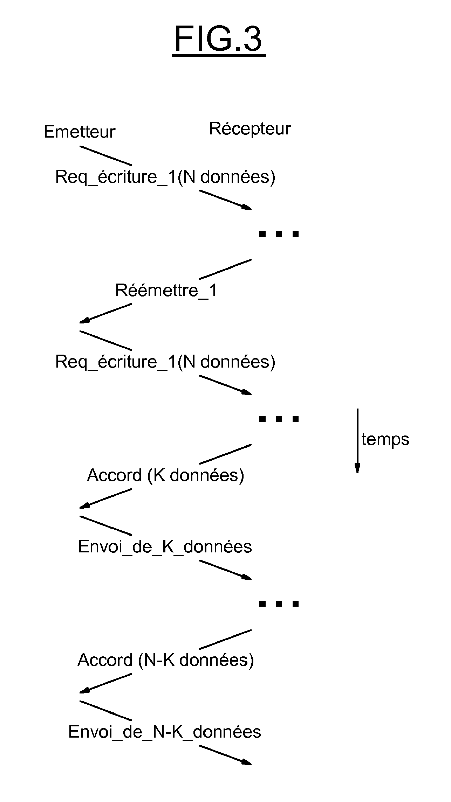

Lorsque l'agent récepteur 8 n'est pas immédiatement disponible, comme illustré sur la figure 3, après avoir a reçu le message de demande de capacité de traitement disponible Req_écriture_1(N données), il mémorise une information représentative de la réception de ce message de demande de capacité non traité, et attend de pouvoir allouer des moyens de traitement à un tel message de demande de capacité. Dès que l'agent récepteur 8 a la capacité d'allouer des moyens de traitement pour un tel message de demande de capacité, il émet un message d'autorisation de demande Réémettre_1 vers l'agent émetteur 6, qui, lorsqu'il le reçoit, émet à nouveau le message de demande de capacité de traitement disponible Req_écriture_1(N données).

Quand l'agent récepteur 8 peut traiter ce message de demande de capacité Req_écriture_1(N données), il alloue des moyens de traitement de ce message, et envoie un message d'autorisation de demande Réémetre_1 à l'agent émetteur 6. Lorsque l'agent émetteur 6 reçoit ce message d'autorisation de demande Réémetre _1, il émet à nouveau le message de demande de capacité Req_écriture_1(N données), qui est traité par l'agent récepteur 8 dès qu'il est reçu. Puis, l'agent récepteur 8 attend de pouvoir traiter les instructions correspondantes, ou tout du moins une partie. En variante, l'agent récepteur 8 peut attendre d'être prêt à traiter l'ensemble des instructions (N données) et non seulement une partie (K données). Lorsque l'agent récepteur 8 est prêt à traiter K données sur les N données d'instructions correspondantes mémorisées par l'agent émetteur 6, l'agent récepteur 8 émet un message d'autorisation d'instructions Accord(K données), de petite taille, vers l'agent émetteur 6. A réception de ce message d'autorisation d'instructions Accord(K données), l'agent émetteur 6 envoie un message d'instructions Envoi_de_K_données comprenant K données mémorisées, par exemple les K premières, et efface celles-ci de sa mémoire.

A réception de ce message d'instructions Envoi_de_K_données comprenant ces K données, de grande taille, l'agent récepteur 8 traite ces K données, et attend d'être prêt à pouvoir traiter une autre partie de ces données utiles du message d'instructions mémorisé dans l'agent émetteur 6. Une fois prêt à traiter d'autres données, par exemple les N-K données restantes, il émet un message d'autorisation d'instructions, de petite taille, Accord(N-K données) à destination de l'agent émetteur 6, qui, à réception, envoie un message d'instructions Envoi_de_N-K_données vers l'agent récepteur 8. A réception du message d'instructions Envoi_de_N-K_données, l'agent récepteur 8 traite les N-K données restantes.

Ainsi, n'ont été émis dans le réseau, que les messages de grande taille Envoi_de_K_données et Envoi_de_N-K_données, dont les données utiles peuvent être traitées dès l'arrivée du message à destination. En outre un seul message d'autorisation de demande Réémettre_1 et un seul message d'autorisation d'instructions pour une quantité de données à traiter Accord(K données) et Accord(N-K données) ont été transmis dans le réseau d'interconnexions 3 durant cette transaction. Les risques de blocage et l'encombrement du réseau d'interconnexions 3 sont alors limités.

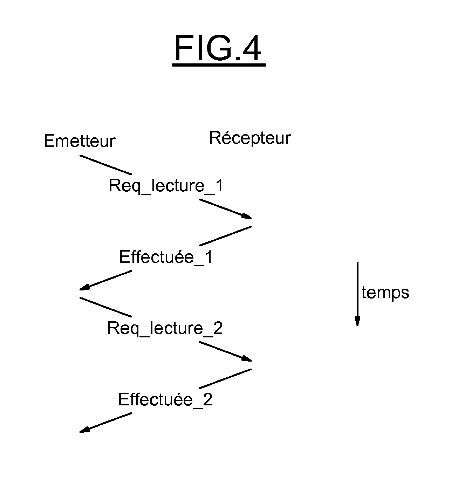

Dans le cas d'un message de requête dépourvu de données utiles, par exemple une lecture de données, tel qu'illustré sur la figure 4, le bloc initiateur 1 émet un message de requête de lecture à l'agent émetteur 6, par l'intermédiaire de l'interface réseau 7. L'agent émetteur 6 mémorise un message d'instructions, de petite taille, correspondant au message de requête en lecture de données. L'agent émetteur 6 émet un message d'instructions Req_lecture_1, de petite taille, comprenant une adresse de destination, qui est un message classique de requête de lecture de données. L'adresse de destination est l'adresse de l'agent récepteur 8 dédié au bloc destinataire 2. Ce message d'instructions Req_lecture_1 étant de petite taille, encombre peu le réseau d'interconnexions 3.

Lorsque le message d'instructions Req_lecture_1 arrive à l'agent récepteur 8, l'agent récepteur 8 peut immédiatement traiter ce message d'instructions, et alloue des moyens de traitement de ce massage, et retourne un message de notification de fin de traitement Effectuée _1, à réception duquel l'agent émetteur 6 efface de sa mémoire le message d'instructions mémorisé Req_lecture_1 . Puis, une autre transaction de lecture de données est effectuée de manière similaire, avec un message d'instructions mémorisé Req_lecture_2, et un message de notification de fin de traitement Effectuée_2 en retour.

On évite d'envoyer à de multiples reprises le message d'instructions mémorisé. On diminue ainsi les risques d'encombrement du réseau dus au blocage d'un agent récepteur 8 ou du bloc destinataire associé 2.

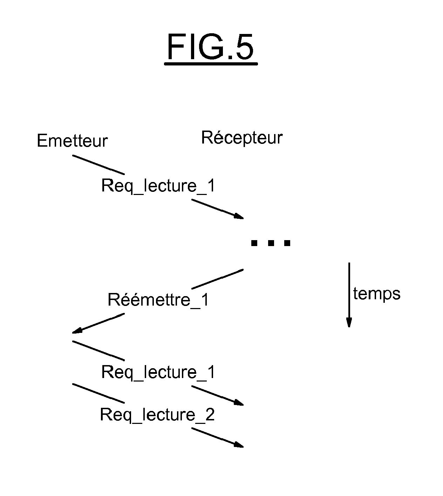

Lorsque l'agent récepteur 8 n'est pas immédiatement disponible, comme illustré sur la figure 5, après avoir a reçu le message d'instructions mémorisé Req_lecture_1, il mémorise une information représentative de la réception de ce message d'instructions non traité, et attend de pouvoir allouer des moyens de traitement à un tel message d'instructions. Dès que l'agent récepteur 8 a la capacité d'allouer des moyens de traitement pour un tel message d'instructions, il alloue des moyens de traitement de ce message, et émet un message d'autorisation de demande Réémettre_1 vers l'agent émetteur 6, qui, lorsqu'il le reçoit, émet à nouveau le message d'instructions mémorisé Req_lecture_1. Ainsi, quand l'agent récepteur 8 reçoit à nouveau ce message d'instructions Req_lecture_1, il le traite immédiatement.

Lorsqu'une requête en écriture du bloc initiateur 1 a été traitée, le bloc destinataire retourne un message d'acquittement par le réseau de réponses 5 vers le module 10 d'agrégation d'acquittements, qui transfère un message d'acquittement de fin de transaction au bloc initiateur 1.

Lorsqu'une requête en écriture a été traitée en plusieurs étapes, en fractionnant les données à traiter, et que le bloc destinataire 2 a envoyé plusieurs messages d'acquittements successifs au module d'agrégation 10 correspondant respectivement aux fractions des données traitées, le module d'agrégation 10 agrège ces différents acquittements en un unique acquittement final de transaction à destination du bloc initiateur 1.

L'agent récepteur 8 peut ne pouvoir mémoriser qu'un nombre prédéterminé d'informations représentatives de la réception de message de demande de capacité ou de message d'instructions émis par l'agent émetteur (6). Dans un réseau d'interconnexions à routage statique, un chemin entre un agent émetteur et un agent récepteur est fixe, les messages ne se doublent pas et leur ordre est conservé. Envoyer plusieurs messages courts à la suite, de l'agent émetteur 6 vers l'agent récepteur 8 permet de masquer une partie de la latence supplémentaire due aux allers et retours entre l'agent émetteur et l'agent récepteur.

Etant plus facile d'augmenter les performances du réseau d'interconnexions 3 que les performances des blocs fonctionnels ou blocs IP, généralement les blocs fonctionnels sont plus lents que le réseau d'interconnexions 3, ou, en d'autres termes fonctionnent à un cadencement d'horloge moins élevé. Aussi, lorsque l'agent émetteur 6 reçoit des données du bloc initiateur 1 à une fréquence de cadencement d'horloge inférieure à celle du réseau, si on ne veut pas avoir trop de trous de données, on mémorise et on compacte les données avant de les envoyer dans le réseau d'interconnexions. Bien entendu, si les largeurs des liens de communication ne sont pas les mêmes des deux cotés d'une interface réseau, il faut comparer les débits de données (fréquence multipliée par largeur du lien) plutôt que les fréquences de cadencement d'horloge. Or des moyens de mémorisations, généralement organisés sous forme de files d'attentes existent déjà dans l'agent émetteur 6, pour mémoriser les messages en attente. Il est donc possible, sans coût supplémentaire, de mettre à profit les moyens du dispositif pour compacter les données avant l'émission. Si on souhaite optimiser la latence, on peut commencer à émettre un message de demande d'écriture avant même que l'agent émetteur 6 n'ait reçu l'intégralité des données utiles. En effet, connaissant le délai minimum pour envoyer le message de demande d'écriture à l'agent récepteur et recevoir la première autorisation d'envoi d'une partie ou de la totalité des données utiles, et connaissant, grâce au contenu de l'entête du message, le nombre total de données à émettre et les débits en entrée et en sortie de l'agent émetteur, on peut déduire l'instant auquel il faudra émettre le message de demande de capacité, pour que l'arrivée de la dernière donnée dans l'agent émetteur 6 coïncide avec l'instant où on peut l'émettre, lorsqu'il n'y a pas de latence supplémentaire due à une indisponibilité temporaire de l'agent récepteur 8. Cela est possible grâce à la connaissance de l'architecture du réseau d'interconnexions, on peut connaître le nombre de cycles d'horloge pour aller d'un point à un autre. Les débits attendus sont aussi connus lors du dimensionnement du réseau.

La plupart des blocs destinataires critiques que l'on cherche à exploiter au maximum, comme un contrôleur de mémoire vive dynamique ou contrôleur de DRAM, sont déjà pourvus de files d'attente afin anticiper le trafic de données. Par exemple, dans le contrôleur de DRAM un problème majeur est de minimiser le nombre de retournements entre une lecture et une écriture de données, par conséquent avoir une meilleure visibilité sur les lectures et les écritures en attente permet de choisir plus efficacement les meilleurs instants de retournements. L'invention permet d'améliorer cette visibilité en fournissant des prévisions sur le trafic à venir en amont du réseau d'interconnexions 3. Si, de plus, les messages courts comprennent une information de priorité il est possible d'allouer des moyens de traitement en fonction de cette information de priorité. En outre, si l'agent récepteur est occupé, le message prioritaire sera traité avant tout autre nouveau message, contrairement à un dispositif dans lequel un message prioritaire propage sa priorité à travers le réseau, qui, dans cette situation, peut être encombré. Le dispositif améliore la gestion des files d'attente des blocs destinataires et permet d'améliorer la qualité de service des réseaux d'interconnexions en agissant sur les demandes en attente et non plus après l'engorgement du réseau.

L'invention permet d'éviter un blocage de trafic de données aux bornes du réseau d'interconnexions, ainsi qu'une extension d'un tel blocage dans le réseau. En outre, les risques de blocage interne du réseau d'interconnexions étant moins élevés, les écarts entre les pics de trafic et la valeur moyenne de trafic sont réduits, et le système est alors plus déterministe et donc plus aisé à analyser.

L'invention permet de limiter les risques de blocages d'un réseau d'interconnexions de blocs IP sur puce dus a des congestions de trafic de données en entrée de blocs fonctionnels.

## Revendications

1. Système de gestion de messages transmis dans un réseau d'interconnexions (3) sur puce comprenant au moins un agent émetteur (6) et un agent récepteur (8), **caractérisé en ce que** l'agent émetteur (6) est adapté pour :
- mémoriser un message d'instructions (Envoi_de_N_données) de taille supérieure à une taille prédéterminée;
- émettre un message de demande de capacité de traitement disponible (Req_écriture_1(N données)) pour l'agent émetteur (6), ledit message de demande de capacité (Req_écriture_1(N données)) comprenant une adresse de destination et étant de taille inférieure ou égale à ladite taille prédéterminée, vers l'agent récepteur (8) correspondant à ladite adresse de destination;
- émettre vers l'agent récepteur (8) ledit message d'instructions mémorisé (Envoi_de_N_données), à réception d'un message d'autorisation d'instructions (Accord(N données)) de l'agent récepteur (8) lorsque l'agent récepteur (8) est prêt à traiter lesdites instructions; et
- libérer tout ou partie de l'espace de mémoire occupé par ledit message d'instructions (Envoi_de_N_données) après ladite émission dudit message d'instructions mémorisé (Envoi_de_N_données).

2. Système selon la revendication 1, dans lequel l'agent émetteur (6) est, en outre, adapté pour émettre à nouveau ledit message de demande de capacité (Req_écriture_1(N données)), à réception d'un message d'autorisation de demande (Réémettre_1) de l'agent récepteur (8) lorsque l'agent récepteur (8) est prêt à traiter ladite demande de capacité.

3. Système de gestion de messages transmis dans un réseau d'interconnexions (3) sur puce comprenant au moins un agent émetteur (6) et un agent récepteur (8), **caractérisé en ce que** l'agent récepteur (8) est adapté pour :
- allouer des moyens de traitement d'un message de demande de capacité de traitement disponible (Req_écriture_1(N données)) provenant de l'agent émetteur (6) si l'agent récepteur (8) est prêt à traiter ladite demande de capacité, ledit message de demande de capacité étant de taille inférieure ou égale à une taille prédéterminée ; et
- émettre un message d'autorisation d'instructions (Accord(N données)), de taille inférieure ou égale à ladite taille prédéterminée, vers l'agent émetteur (6), autorisant l'agent émetteur (6) à émettre un message d'instructions (Envoi_de_N_données) de taille supérieure à ladite taille prédéterminée, lorsque l'agent récepteur (8) est prêt à traiter lesdites instructions, après avoir alloué des moyens de traitement pour traiter ledit message de demande de capacité (Req_écriture_1(N données)).

4. Système selon la revendication 3, dans lequel l'agent récepteur (8) est, en outre, adapté, lorsque l'agent récepteur (8) est incapable de traiter immédiatement ladite demande de capacité, pour mémoriser une information représentative de la réception dudit message de demande de capacité (Req_écriture_1(N données)) afin d'attendre d'être prêt à traiter ladite demande de capacité, allouer des moyens de traitement dudit message de demande de capacité et émettre un message d'autorisation de demande (Réémettre_1) vers l'agent émetteur (6), autorisant le renvoi du message de demande de capacité (Req_écriture_1(N données)) de l'agent émetteur (6) vers l'agent récepteur (8), ledit message d'autorisation de demande étant de taille inférieure ou égale à ladite taille prédéterminée.

5. Système de gestion de messages transmis dans un réseau d'interconnexions (3) sur puce comprenant au moins un agent émetteur (6) et un agent récepteur (8), **caractérisé en ce que** l'agent émetteur (6) est adapté pour :
- mémoriser un message d'instructions (Req_lecture_1) ;
- émettre ledit message d'instructions (Req_lecture_1), comprenant une adresse de destination et étant de taille inférieure ou égale à une taille prédéterminée, vers l'agent récepteur (8) correspondant à ladite adresse de destination; et
- libérer tout l'espace de mémoire occupé par ledit message d'instructions (Req_lecture_1) à réception d'un message de notification de fin de traitement (Effectuée _1) de l'agent récepteur (8) ou à nouvelle émission dudit message d'instructions (Req_lecture_1) suite à réception d'un message d'autorisation d'instructions (Réémettre_1) de l'agent récepteur (8).

6. Système selon la revendication 5, dans lequel l'agent émetteur (6) est, en outre, adapté pour émettre vers l'agent récepteur (8) ledit message d'instructions mémorisé (Req_lecture_1), à réception d'un message d'autorisation d'instructions (Réémettre_1) de l'agent récepteur (8) lorsque l'agent récepteur (8) est prêt à traiter lesdites instructions.

7. Système de gestion de messages transmis dans un réseau d'interconnexions (3) sur puce comprenant au moins un agent émetteur (6) et un agent récepteur (8), **caractérisé en ce que** l'agent récepteur (8) est adapté pour allouer des moyens de traitement dudit message d'instructions (Req_lecture_1) si l'agent récepteur (8) est prêt à traiter ledit message d'instructions, ledit message d'instruction étant de taille inférieure ou égale à une taille prédéterminée.

8. Système selon la revendication 7, dans lequel l'agent récepteur (8) est, en outre, adapté, lorsque l'agent récepteur (8) est incapable de traiter immédiatement ledit message d'instructions (Req_lecture_1), pour mémoriser une information représentative de la réception dudit message d'instructions (Req_lecture_1) afin d'attendre d'être prêt à traiter ledit message d'instructions (Req_lecture_1), allouer des moyens de traitement dudit message d'instructions (Req_lecture_1) et émettre un message d'autorisation d'instructions (Réémettre_1) vers l'agent émetteur (6), autorisant le renvoi du message d'instructions (Req_lecture_1) de l'agent émetteur (6) vers l'agent récepteur (8).

9. Système selon l'une des revendication 1 à 4, dans lequel l'agent émetteur (6) est adapté pour fractionner un message de taille supérieure à ladite taille prédéterminée en plusieurs messages de taille supérieure à ladite taille prédéterminée, et dans lequel ledit message d'autorisation comprend un paramètre représentatif de la taille maximale d'instructions pouvant être traitées par l'agent récepteur (8), l'agent émetteur (6) étant adapté pour libérer une partie, de taille égale à ladite taille maximale, de l'espace de mémoire occupé par un message d'instructions mémorisé, après réception du message d'autorisation d'instructions et émission d'un message d'instructions comprenant une partie, de taille égale à ladite taille maximale, des instructions dudit message d'instructions mémorisé.

10. Système selon l'une des revendications précédentes, dans lequel ledit agent récepteur (8) est adapté pour réserver ses capacités de traitement aux messages d'instructions provenant exclusivement d'un desdits agents émetteurs.

11. Système selon l'une des revendications précédentes, dans lequel ladite taille prédéterminée correspond à la taille de l'entête d'un message.

12. Système selon l'une des revendications précédentes, dans lequel, ledit réseau d'interconnexions (3) comprenant un réseau de requêtes (4) et un réseau de réponses (5) distincts, ledit système de gestion est dédié au réseau de requêtes (4).

13. Système selon l'une des revendications précédentes, dans lequel, ledit réseau d'interconnexions (3) comprenant un réseau de requêtes (4) et un réseau de réponses (5) distincts, ledit système de gestion de messages est dédié au réseau de réponses (5).

14. Système selon l'une des revendications précédentes, dans lequel ledit agent émetteur (6) est adapté pour gérer l'envoi de messages d'instructions mémorisés en fonction de la latence minimum séparant l'envoi d'un message de demande de capacité ou d'un message d'instructions et la réception du message d'autorisation correspondant, pour éviter la présence de trous de données lors de l'envoi de messages d'instructions.

15. Système selon l'une des revendications précédentes, dans lequel ledit agent récepteur (8) est adapté pour mémoriser, pour chaque agent émetteur possible, sous forme de file d'attente, un nombre prédéterminé d'informations représentatives de la réception de messages de demande de capacité ou de messages d'instructions que l'agent récepteur (8) est incapable de traiter immédiatement, de taille inférieure ou égale à ladite taille prédéterminée, provenant de l'agent émetteur correspondant à ladite file d'attente.

16. Système selon l'une des revendications précédentes, dans lequel ledit agent récepteur (8) est adapté pour traiter en priorité les messages prioritaires de demande de capacité ou d'instructions, de taille inférieure ou égale à ladite taille prédéterminée.

17. Procédé de gestion de messages transmis dans un réseau d'interconnexions (3) sur puce, dans lequel un agent émetteur (6) émet un message de demande de capacité de traitement disponible (Req_écriture_1(N données)) à destination d'un agent récepteur (8), ledit message de demande de capacité (Req_écriture_1(N données)) comprenant l'adresse de destination de l'agent récepteur (8) et étant de taille inférieure ou égale à une taille prédéterminée, émet un message d'instructions (Envoi_de_N_données) lorsque l'agent récepteur (8) est prêt à traiter lesdites instructions, et libère tout ou partie de l'espace de mémoire occupé par ledit message d'instructions (Envoi_de_N_données) après ladite émission dudit message d'instructions mémorisé (Envoi_de_N_données).

18. Procédé de gestion de messages transmis dans un réseau d'interconnexions (3) sur puce, dans lequel un agent émetteur (6) émet un message d'instructions (Req_lecture_1) à destination d'un agent récepteur (8), ledit message d'instructions (Req_lecture_1) comprenant l'adresse de destination de l'agent récepteur (8) et étant de taille inférieure ou égale à une taille prédéterminée, émet à nouveau ledit message d'instructions (Req_lecture_1) lorsque l'agent récepteur (8) est prêt à traiter lesdites instructions, et libère tout ou partie de l'espace de mémoire occupé par ledit message d'instructions (Req_lecture_1) à réception d'un message de notification de fin de traitement (Effectuée _1) de l'agent récepteur (8) ou à nouvelle émission dudit message d'instructions (Req_lecture_1) suite à réception d'un message d'autorisation d'instructions (Réémettre_1) de l'agent récepteur (8).
